(19) Europäisches Patentamt
European Patent Office
Office européen des brevets

(11) **EP 4 542 853 A1**

(12) **EUROPEAN PATENT APPLICATION**

(43) Date of publication:
**23.04.2025 Bulletin 2025/17**

(21) Application number: **23461670.4**

(22) Date of filing: **20.10.2023**

(51) International Patent Classification (IPC):
***H02S 20/32*** *(2014.01)*

(52) Cooperative Patent Classification (CPC):
**H02S 20/32; F24S 50/20;** F24S 2050/25

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Saule S.A.**
**54-427 Wroclaw (PL)**

(72) Inventors:
• **CICHOCKA, Judyta**
**50-212 Wroclaw (PL)**
• **LOJ, Szymon**
**53-445 Wroclaw (PL)**

(74) Representative: **Kancelaria Eupatent.pl Sp. z.o.o**
**Ul. Kilinskiego 185**
**90-348 Lodz (PL)**

(54) **A METHOD FOR POSITIONING OF A PV SURFACE FOR OPTIMIZED SOLAR IRRADIANCE**

(57) Disclosed is a method for positioning of a PV surface (10) in which location data and an initial position of the PV surface (10) are provided. Then a radiation data corresponding the location of the PV surface (10) is also provided. The method is characterized in that it comprises the steps of determining the maximum radiation vector ($V_{Rmax}$) of the sun, determining the normal radiation vector ($N_{Rmax}$) of the PV surface (10), determining the adjusted position of the PV surface (10) so that the normal radiation vector ($N_{Rmax}$) of the PV surface (10) is aligned with the maximum radiation vector ($V_{Rmax}$) of the sun, and changing the position of the PV surface (10) to the adjusted position. Another object of this invention is a computer program performing all the steps according to this disclosure.

location ----- Weather Data

time period ----- Weather Data Analysis

Step 110
Calculate
Maximum Radiation Vector
$V_{Rmax}$

Step 120
Calculate
Normal Radiation Vector
of the PV surface
$N_{Rmax}$

Step 130
Detrmine
the adjusted position
of the PV surface
$V_{Rmax}=-N_{Rmax}$

Step 140
Change the position
of the PV surface
to the adjusted position

Fig. 1b

**EP 4 542 853 A1**

**Description**

TECHNICAL FIELD

The present disclosure relates to the field of photovoltaics and more specifically to systems containing solar radiation receiving surfaces. The present invention describes a method for increasing the solar energy potential of said photovoltaic surfaces by defining their optimal spatial orientation with respect to the direction of solar radiation, taking into account different shapes and shading conditions of said structures.

BACKGROUND

The energy consumption around the world has been constantly increasing over the last years. Predictions for even bigger energy demand in coming decades push the industry into looking for alternative energy sources and increasing efficiencies of existing ones.

Solar energy is a powerful source of renewable energy. Photovoltaic installations can be applied in various places, such as rooftops, building integrated systems, solar farms, agrivoltaics etc. Some attempts to increase energy yield from such photovoltaic installations were made.

For example, a Polish patent application PL435069 describes a method for increasing the energy yield of solar modules installed on roofs of the buildings by planning their arrangement and orientation. However, it focuses on flat surfaces and is restricted to rigid PV modules, with orientation partially limited due to the geometry and orientation of the roof itself, making the optimal installation angles dependent on the position of the roof and location of surroundings.

The fast development of flexible and light-weight photovoltaic technologies, such as perovskite solar cells, allows to introduce various new functionalities compared to what existing photovoltaic systems have to offer. The properties of those emerging PV technologies provide feasibility of wider scope of applications, including installations on variety of differently shaped elements of built or natural environments, as well as their incorporation or integration therein. Moreover, lightweight and thin-film solar modules allow to use them in space applications, where weight and volume of devices placed inside a space craft play a crucial role due to the limited space inside a space craft and have a large impact in terms of total launch cost.

Moreover, photovoltaic installations observe increased demand, as they can help to diversify the energy sources, provide green renewable energy, which can cover at least partially the increased energy usage. It is desirable to make use of such functionalities and find ways to maximize the energy potential of solar receiving surfaces of various shapes and at different shading conditions.

SUMMARY OF THE INVENTION

There is a need to overcome at least some of the problems discussed above and to provide a method for optimizing the spatial orientation of solar radiation receiving surfaces, which are referred to in this disclosure as PV surfaces, with respect to direction of solar radiation in order to make the most beneficial use of solar energy potential according to the requirements of given PV systems, improve the performance of said PV systems and to meet the increasing energy demand. Moreover, there is a need to provide a method that can be applicable to both flat and non-flat surfaces, as well as that considers different shading conditions.

In one aspect of the present invention, there is provided a method comprising steps necessary to obtain the spatial orientation of PV surfaces providing the optimized solar potential of abovementioned PV surfaces. The optimized solar potential of the PV surface is achieved when either the maximum irradiance or another specific value of irradiance is received by said surface. For example, the optimized potential can be considered to be achieved when a specific value of irradiance, other than the maximum is obtained, such as a predetermined value, or a value that is not less than a predetermined threshold (given as a value or a percentage) as compared to the maximum irradiance, or a value higher than a predetermined threshold (given as a value or a percentage) from a currently received irradiance.

The method comprises a step of finding the maximum radiation vector for a specific location (e.g. a location of installation of the PV surfaces), and for a specific time frame. The maximum radiation vector according to the present disclosure is a vector specifying the direction of the maximum solar radiation and it takes into account a direct radiation and a diffuse radiation. The direct radiation defines the radiation coming directly from the Sun, and it is calculated based on the generally known trajectory of the Sun at specific geographic locations and time. The diffuse radiation is a part of the total radiation that reaches the Earth's surface after a change of its directions due to scattering by the atmosphere. The diffuse radiation is frequently omitted in commonly used sun-tracking methods, however the diffuse radiation has a significant impact on obtaining a good estimation of the optimal energy potential. For the sake of this disclosure, it should be understood that the maximum radiation vector defines the maximum radiation coming from the direct radiation and the diffuse radiation.

Next, the method comprises a step of finding a vector normal to the analyzed PV surface and aligning it with the previously found maximum radiation vector. The normal vector can be defined for both flat and non-flat surfaces. The step of alignment of the normal vector and the maximum radiation vector allows to reach the optimized solar potential of the analyzed surface. Additionally, the amount of irradiance received by the surface can be controlled by adjusting the angle between the normal vector and the maximum radiation vector.

Moreover, the method comprises an additional step of optimizing the spatial orientation of the analyzed PV surface, which is particularly beneficial in case when said surface is subjected to shading caused by external context (external shading), such as trees or buildings, as well as parts of the same photovoltaic systems. External shading is understood as all objects in the proximity of the PV system which may cast shadow on the system, excluding the elements of the system itself.

Additionally, the presented disclosure describes a method for optimizing the spatial orientation of PV surfaces being part of larger photovoltaic systems. In such applications self-shading occurs when certain PV surface or its part cause shadow on one another and it has to be considered in the evaluation of the overall performance of the PV system.

The details and specifics of the method according to the present invention are defined in details in the set of appended claims.

BRIEF DESCRIPTION OF DRAWINGS

The present invention is shown by means of example embodiments on a drawing, wherein:

Fig. 1a presents a block diagram of the method for positioning of PV surfaces for optimized solar irradiance for a shaded PV surface;

Fig. 1b presents a block diagram of the method for positioning of PV surface for optimized solar irradiance for a non-shaded PV surface;

Fig. 2 presents a step of calculating the maximum radiation vector in accordance with the first embodiment of the present disclosure;

Figs. 3-5 present a step of calculating the maximum radiation vector in accordance with the second embodiment of the present disclosure;

Fig. 6 presents a step of calculating the maximum radiation vector in accordance with the third embodiment of the present disclosure;

Fig. 7 presents a step of calculating the normal vector of the flat and non-flat PV surfaces in accordance with an embodiment of the present disclosure;

Fig. 8 presents a step of determining the adjusted position of the PV surface in accordance with an embodiment of the present disclosure;

Fig. 9 presents the PV surface in the adjusted position in accordance with a an embodiment of the present disclosure;

Figs. 10a-10c present respectively: the initial position, the adjusted position and the optimal position of the PV surface in accordance with an embodiment of the present disclosure;

Fig. 11 presents a PV system comprising the PV surfaces in the initial position in accordance with an embodiment of the present disclosure;

Fig. 12 presents the PV system comprising the PV surfaces in the adjusted position in accordance with an embodiment of the present disclosure;

Fig. 13 presents the PV system comprising the PV surfaces in the optimal position in accordance with an embodiment of the present disclosure;

Fig. 14 presents a PV system comprising the PV surfaces in the initial position in accordance with an embodiment of the present disclosure;

Fig. 15 presents the PV system comprising the PV surfaces in the adjusted position in accordance with an embodiment of the present disclosure;

Fig. 16 presents the PV system comprising the PV surfaces in the optimal position in accordance with an embodiment of the present disclosure;

DETAILED DESCRIPTION OF EMBODIMENTS

Reference will now be made to embodiments, examples of which are illustrated in the accompanying drawings. Aspects and features of the invention will be described with reference to the accompanying drawings. In the drawings, like reference numerals denote like elements. The present invention, however, may be embodied in various different forms and should not be construed as being limited only to the illustrated embodiments. Rather, the presented embodiments are provided as example so that this disclosure will be thorough and complete, and will fully convey the aspects and features of the present invention to those skilled in the art. It shall be understood that not all of the features shown in the embodiment are essential and the scope of the protection is defined not by means of literally shown embodiment, but by the features provided in the claims.

Before the method for positioning of the PV surface is performed, there is a need to provide location data and an initial position data of the PV surface. Also there is a need to provide a radiation data corresponding the location of the PV surface. The radiation data may be based on the historical data, live radiation measurement data and/or forecast data. In the context of the present invention the term "initial position" refers to the position with respect to which any modifications of the position of the PV surface are carried out. The "initial position data" includes, for example the direction and angle of inclination of the PV surface with respect to any reference plane.

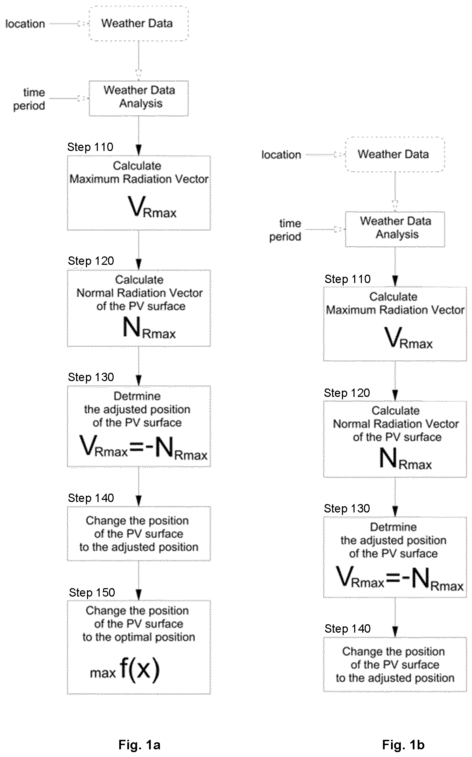

Fig. 1a and 1b present the method for positioning of a PV surface for optimized solar irradiance according to the present disclosure. The method comprises the steps, as shown in Fig. 1a and 1b. Fig. 1a presents the method steps according to the first embodiment of the present disclosure, applicable to a PV surface being subjected to shading conditions. Fig. 1b presents the method steps according to the second embodiment of the present disclosure, applicable to a PV surface not being subjected to shading conditions. The method as shown in Fig. 1a comprises the following steps:

-    step 110 of calculating the maximum radiation vector $V_{Rmax}$,
-    step 120 of calculating the normal radiation vector $N_{Rmax}$, which is a vector normal to the analyzed PV surface,
-    step 130 of determining the adjusted position in which the maximum radiation vector $V_{Rmax}$ calculated in step 110 and the normal vector $N_{Rmax}$ calculated in step 120 are aligned,
-    step 140 of changing the position of the PV surface to the adjusted position determined in step 130,
-    step 150 of changing the position of the PV surface to the optimal position.

The method according to Fig. 1b differs from the method according to Fig. 1a in that it does not include step 150.

The method is applicable to solar radiation receiving surfaces of various scales and used in various types of applications. For example, the method is applicable in outer space applications, large scale PV applications such as building integrated photovoltaics, building applied photovoltaics, large scale freestanding photovoltaic applications, including solar farms or small scale PV applications, such as everyday use objects containing PV modules or IoT devices. The PV surface may be a flat surface, a non-flat surface or a polysurface.

The method uses location data where the analyzed PV surface is placed. This location is used to collect input data comprising weather data, if weather data is available for this location. In case weather data is not available for this location, weather data can be collected for another location on the Earth's surface that is in proximity to the actual location of the analyzed PV surface and for which weather data is available. The input data may be historical weather data, however it should be understood that other input data may be used alternatively. The other input data may be live radiation data or weather forecast data. In case of outer space applications, the input data may obtained by measuring devices placed on objects located in the outer space, such as on satellites.

The method also uses a time interval, which can be e.g. a year, a day, an hour, a minute, or a second. It should be noted that the adjusted position or the optimal position of the PV surface may be constant or variable. The position of the PV surface may be changed in real-time according to time intervals ranging from one second to one year. The terms "position" and "orientation" of the surfaces are used interchangeably. It should be noted that when the position changes, the orientation changes as well.

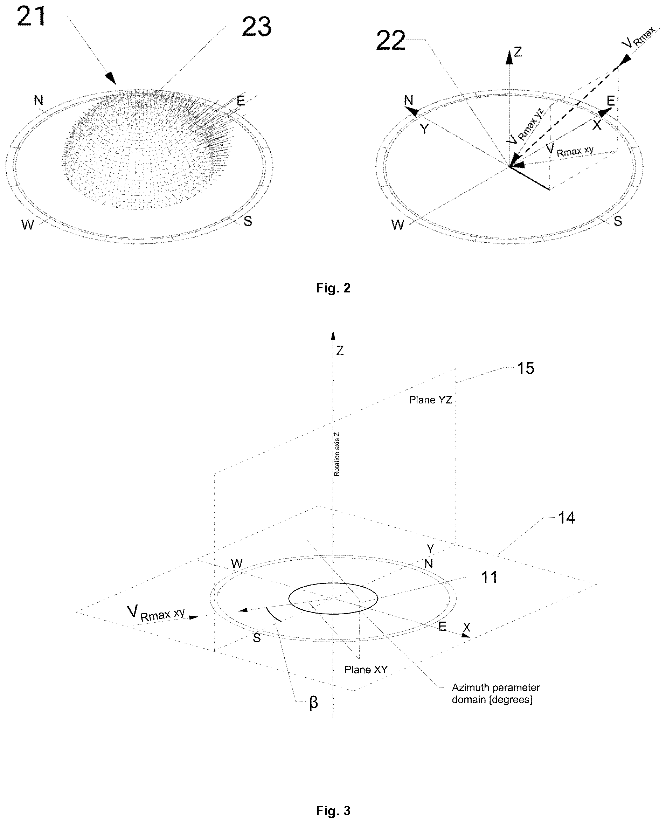

Fig. 2 presents details of a first embodiment of carrying our step 110 of calculating the maximum radiation vector $V_{Rmax}$. It may be performed for a specific location and a specific time frame. A radiation dome 21 is spread around a reference point 22, where the analyzed PV surface is placed. The radiation dome 21 has a shape of a hemisphere. The center of the hemisphere is positioned at the center of the PV surface at the reference point 22. The radiation dome 21 is split into a mesh containing a plurality of dome mesh faces 23, each of the dome mesh faces 23 being a separate measurement point. Radiation values are calculated for each measurement point based on weather data selected for specific location and the time interval. The minimal time interval for which the calculation is performed depends on the data provided by the weather data source. Each measurement point receives a given radiation, represented by a radiation value. The radiation value is described by a length of a vector normal to the surface of a given measurement point. This vector can be referred to as the normal radiation vector. The radiation dome 21 is associated with a number of measurement points, wherein the number of measurement points corresponds to the number of normal radiation vectors. Each of the measurement points can receive different amount of radiation, depending on the orientation of the dome mesh face 23 with respect to the radiation rays. The more radiation received at the measurement point, the longer the normal radiation vector is. The method for calculating the maximum radiation vector $V_{Rmax}$ according to the first embodiment presented herein is to find a single vector that is an average, such as a weighted average, of all the normal radiation vectors (for all measurement points). When calculating the weighted average, the weight is the radiation value. The maximum radiation vector $V_{Rmax}$ is a single vector calculated at a specific location and for a specific time frame, taking into account the radiation values at each measurement point. The number of measurement points can also be referred to as the density of the radiation dome 21 mesh. The greater the density, the more accurate results are obtained. The maximum radiation vector $V_{Rmax}$ corresponds to the single vector being an average of the normal radiation vectors. The diameter of the hemisphere forming the radiation dome 21 is selected, so that it is possible to determine separate measurement points. The diameter of the hemisphere can be of any value.

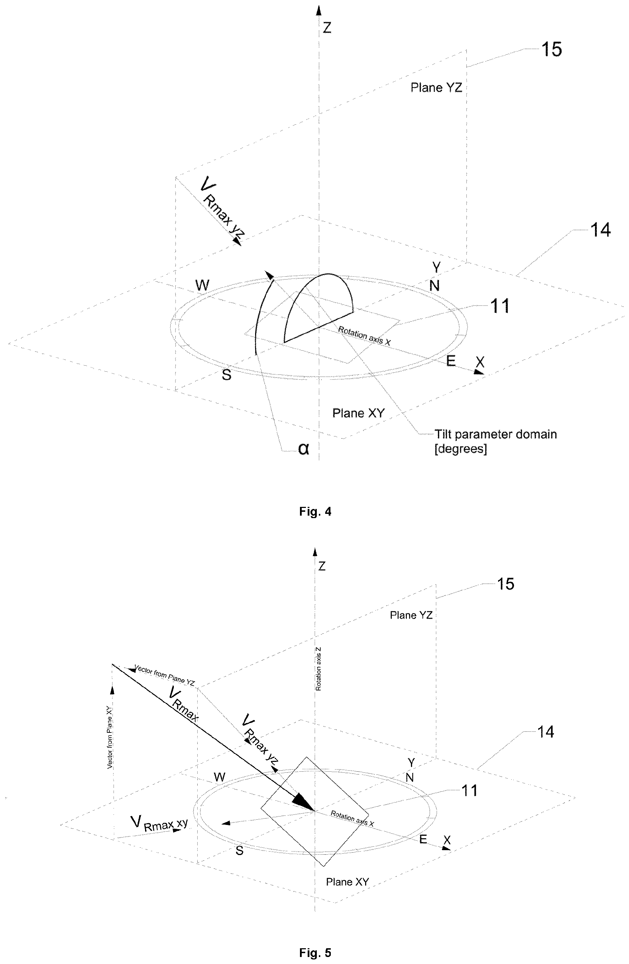

Figs. 3-5 present details of carrying out step 110 of calculating the maximum radiation vector $V_{Rmax}$ according to a second embodiment. Step 110 according this embodiment includes an optimization process. The sample PV surface 11 is introduced, which sample PV surface 11 is a flat surface. The sample PV surface 11 can have any area. Preferably, the area of the sample PV surface 11 varies between $1cm^2$ and $100m^2$. Preferably, the area of the sample PV surface 11 varies between $10cm^2$ and $10m^2$. Preferably, the area of the sample PV 11 is $1m^2$. The shape and type of the sample PV surface 11 are independent of the shape and type of the PV surface 10, for which the method for positioning for optimized solar irradiance is performed according to the present disclosure. The sample PV surface 11 is placed in the center of the Cartesian coordinate system XYZ. It should be noted that the sub-steps of step 110 described below can alternatively be performed in a different coordinate system, in which the sample PV surface 11 can be described. The maximum radiation vector $V_{Rmax}$ is composed of two component vectors $V_{Rmax1}$ (in this embodiment: $V_{Rmax\ xy}$ as shown on Fig. 3) and $V_{Rmax2}$ (in this embodiment: $V_{Rmax\ yz}$ as shown on Fig. 4), which correspond to projections of the maximum radiation vector $V_{Rmax}$ onto horizontal (xy) plane 14 and vertical (yz) plane 15 of the Cartesian coordinate system, as it is shown in Figs. 3 - 5. Step 110 according to this embodiment includes calculating the optimal rotation angles of the sample PV surface 11 corresponding to the maximum solar energy potential, in which the sample PV surface 11 receives the maximum solar radiation. The sample PV surface 11 rotation angles are: an azimuth angle $\beta$ and a tilt angle $\alpha$, where the azimuth angle $\beta$ is an angle around the Z-axis (as shown in Fig. 3) and the tilt angle $\alpha$ is an angle around the X-axis (as shown in Fig. 4). The analysis starts when the sample PV surface 11 is in its initial position. The optimal rotation angle including the azimuth angle $\beta$ and the tilt angle $\alpha$ is found by measuring the energy potential of the sample PV surface 11 for the current angle and iteratively increasing a rotation angle, which can be the azimuth angle $\beta$ and the tilt angle $\alpha$, by an incremental step and measuring the energy potential for the next obtained angle. The incremental step can vary between 0.1° and 10°. Preferably the incremental step is 1°. The optimal rotation angles (the optimal azimuth angle $\beta$ and the optimal tilt angle $\alpha$) are the angles where the maximum energy potential is obtained by the sample PV surface 11. The optimal azimuth angle $\beta$ and the optimal tilt angle $\alpha$ are determined separately and independently. It should be noted, that the initial position does not influence the obtained maximum radiation vector $V_{Rmax}$. Starting from a different initial position may result in different values of the optimal azimuth angle $\beta$ and/or the optimal tilt angle $\alpha$, about which the sample PV surface 11 is rotated in order to be placed in a position resulting in the maximum solar radiation. However, the maximum radiation vector $V_{Rmax}$ will be the same independently of the initial position of the sample PV surface 11.

Preferably the optimal azimuth angle $\beta$ is calculated first and the optimal tilt angle $\alpha$ is calculated second. However, the optimal tilt angle $\alpha$ can be defined first and the optimal azimuth angle $\beta$ can be calculated second. After the optimal azimuth angle $\beta$ is determined, the sample PV surface 11 is set to a position defined by this optimal azimuth angle $\beta$, as shown on Fig. 3. A vector normal to the sample PV surface 11 placed in this position is determined. Then, the component vector $V_{Rmax1}$ (in this embodiment: $V_{Rmax\ xy}$) of the maximum radiation vector $V_{Rmax}$ is determined. The component vector $V_{Rmax\ xy}$ is a reversed vector to the normal vector to the sample PV surface 11 placed in the position corresponding to the optimal azimuth angle $\beta$. Correspondingly, after the optimal tilt angle $\alpha$ of the sample PV surface 11 is determined, the sample PV surface 11 is set to a position defined by the optimal tilt angle. A vector normal to the sample PV surface 11 placed in this position is determined as well. Then, the component vector $V_{Rmax2}$ (in this embodiment: $V_{Rmax\ yz}$) of the maximum radiation vector $V_{Rmax}$ is determined. The component vector $V_{Rmax\ yz}$ is a reversed vector to the normal vector to the sample PV surface 11 placed in the position corresponding to the optimal tilt angle $\alpha$. The maximum radiation vector $V_{Rmax}$ is a sum of the two component vectors $V_{Rmax\ xy}$ and $V_{Rmax\ yz}$ corresponding to the optimal rotation angles of the sample PV surface 11.

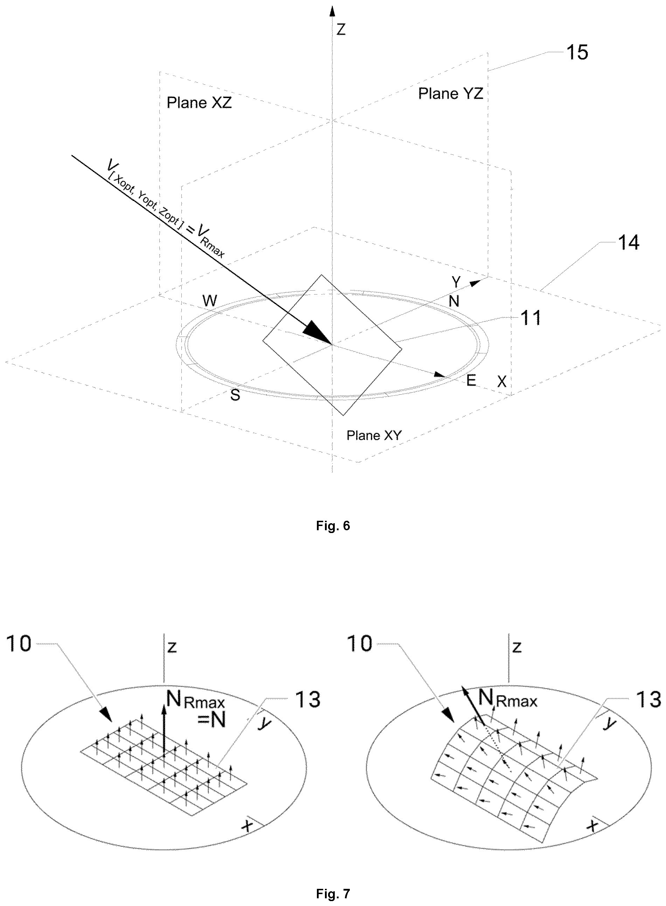

Fig. 6 presents details of carrying out step 110 of calculating the maximum radiation vector $V_{Rmax}$ according to a third embodiment. Step 110 according to this embodiment uses an optimization model. The sample PV surface 11 is placed in a coordinate system XYZ and it is directed towards the radiation. The sample PV surface 11 is being rotated within said coordinate system until it reaches the position in which the sample PV surface receives the maximum radiation. Once this position is reached, a vector normal to the sample PV surface 11 is determined. Then, the maximum radiation vector $V_{Rmax}$ is determined. The maximum radiation vector $V_{Rmax}$ is a reversed vector to the normal vector to the sample PV surface 11 placed in the position, in which the PV surface 11 receives the maximum radiation.

It should be noted, that other alternative methods of calculating the maximum radiation vector $V_{Rmax}$ can be used in step 110, including the methods known in the art, such as, for example transform operations based on matrices or operations using experimental data, empirical data, and other statistical data..

Fig. 7 presents step 120 of calculating the normal radiation vector $N_{Rmax}$ of the PV surface 10 according to the present disclosure. The normal radiation vector $N_{Rmax}$ can be determined for flat and non-flat PV surfaces. The PV surface 10 is discretized into a PV mesh containing a plurality of PV mesh faces 13. Each of the PV mesh faces 13 comprises a normal vector $N_n$ and has a surface area described by a parameter $area_n$. The $N_{Rmax}$ is a vector computed as a weighted average of the normal vectors $N_n$ of PV mesh faces 13 multiplied by a scalar value of $area_n$. The normal radiation vector

$N_{Rmax}$ of the PV surface 10 is calculated, according to Formula I:

$$N_{Rmax} = \frac{\sum_{i=0}^{n} \overline{N_n} \times area_n}{\sum_{i=0}^{n} area_n} \qquad \text{Formula I}$$

where:

  n - number of PV mesh faces 13 of the PV surface 10;
  $N_n$ - a normal vector to the $n^{th}$ PV mesh face 13 of the PV surface 10;
  $area_n$ - area of $n^{th}$ PV mesh face 13 of the PV surface 10.

The total number of PV mesh faces 13 influences the time and accuracy of calculations. The more PV mesh faces 13 are taken into consideration, the denser the mesh, and the more accurate the result. The normal radiation vector $N_{Rmax}$ calculated according to step 120 is used in the next steps of the method according to the present disclosure.

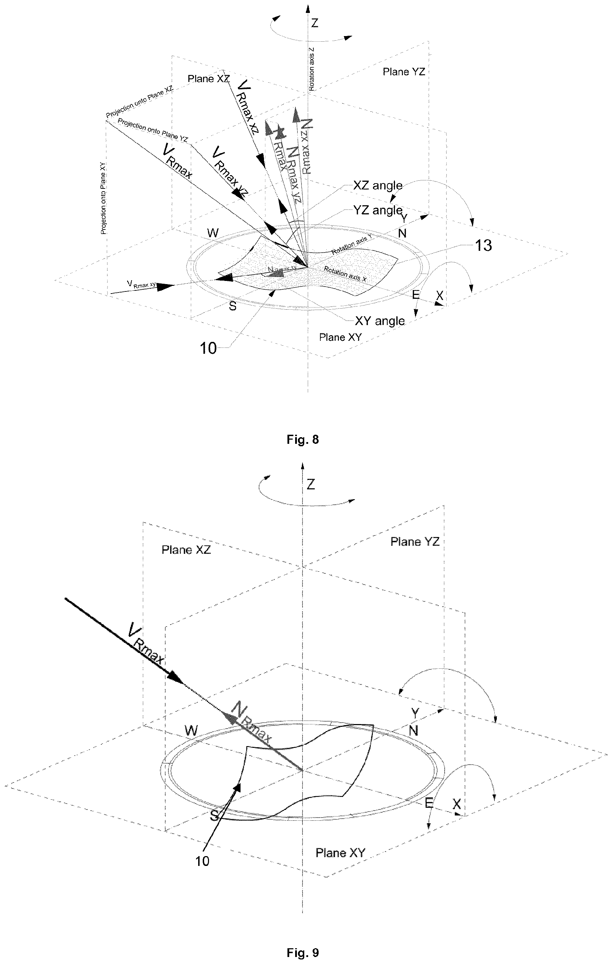

Fig. 8 presents step 130 of determining the adjusted position of the PV surface 10 and step 140 of changing the position of the PV surface 10 to the adjusted position according to an embodiment of the present disclosure. The adjusted position of the PV surface 10 corresponds to the position in which increased solar radiation is received and the energy potential of the PV surface 10 is enhanced. The PV surface 10, according to the embodiment as shown on Fig. 8 is a non-flat surface and it is placed in its the initial position. It should be noted, that step 130 and step 140 may equivalently be performed for flat PV surfaces. Step 130 and step 140 are preceded by step 110 of calculating the maximum radiation vector $V_{Rmax}$ and step 120 of calculating the normal radiation vector $N_{Rmax}$.

The maximum radiation vector $V_{Rmax}$ calculated in step 110 according to an embodiment of the present disclosure is described in the 3-dimensional Cartesian coordinate system XYZ comprising 3 perpendicular planes, namely plane XY, plane XZ, and plane YZ, and 3 perpendicular axes of rotation, namely axis X, axis Y and axis Z. The maximum radiation vector $V_{Rmax}$ contains 3 component vectors $V_{Rmax\,xy}$, $V_{Rmax\,xz}$, $V_{Rmax\,yz}$, wherein each component vector corresponds to projections of said vector onto the corresponding plane.

The normal radiation vector $N_{Rmax}$ calculated in step 120, which the normal radiation vector $N_{Rmax}$ corresponds to the position of the PV surface 10 can be described in the same 3-dimensional coordinate system XYZ as mentioned above it is similarly projected onto plane XY, plane XZ and plane YZ of said coordinate system.. The normal radiation vector $N_{Rmax}$ has its initial point in the origin of said coordinate system, which is the point where all axes of rotation intersect each other. The normal radiation vector $N_{Rmax}$ is projected onto each of the 3 planes of the coordinate system, so that it contains 3 component vectors $N_{Rmax\,xy}$, $N_{Rmax\,xz}$, $N_{Rmax\,yz}$, wherein each of the 3 component vectors correspond to projections or the normal radiation vector $N_{Rmax}$ on the corresponding plane.

Each component vector of the maximum radiation vector $V_{Rmax}$ forms an angle with each corresponding component vector of the normal radiation vector $N_{Rmax}$, namely XY angle formed between $V_{Rmax\,xy}$ and $N_{Rmax\,xy}$, XZ angle formed between $V_{Rmax\,xz}$ and $N_{Rmax\,xz}$ and YZ angle formed between $V_{Rmax\,yz}$ and $N_{Rmax\,yz}$ as shown in Fig. 8.

In order to obtain the adjusted position of the PV surface 10, it is rotated around at least one of the axes of rotation present in the 3-dimensional coordinate system, namely axis X, axis Y, axis Z, to adjust the angles between the component vectors of the maximum radiation vector $V_{Rmax}$ and corresponding component vectors of the normal radiation vector $N_{Rmax}$ and therefore to adjust the position of $V_{Rmax}$ and $N_{Rmax}$. The adjusted position of the PV surface 10 is obtained when $V_{Rmax} = - N_{Rmax}$. Preferably, the PV surface is rotated around at least 1 axis of rotation. Preferably the PV surface 10 is rotated around exactly 2 axes of rotation. It was found by the inventors that the rotation around 2 axes of rotation is enough to place the PV surface 10 in the adjusted position. Preferably, the PV surface 10 is rotated around axis X and axis Z, to adjust the angle YZ and the angle XY between the components of the normal radiation vector $N_{Rmax}$ and the components of the maximum radiation vector $V_{Rmax}$. The adjusted position of the PV surface 10 is achieved when both the angle YZ and the angle XY are adjusted, so that the $V_{Rmax\,yz}$ and the $N_{Rmax\,yz}$ are parallel and the $V_{Rmax\,xz}$ and the $N_{Rmax\,xz}$ are parallel. It should be understood that the PV surface 10 can equally be rotated around axis Y and axis Z, so that the corresponding component vectors of $V_{Rmax}$ and $N_{Rmax}$ are parallel. In fact, the rotation around any combination of 2 different axes of rotation gives the desired result. It should also be noted, that rotations applied in any sequence give the same result.

Fig. 9 presents the PV surface 10 in the adjusted position, which is obtained after carrying out step 130 of determining the adjusted position and step 140 of changing the position of the PV surface 10 to the adjusted position. Basing on the assumption that there is only one maximum radiation vector $V_{Rmax}$ for the specific time interval and at a specific location, the PV surface 10 will receive the maximum energy potential once it is adjusted to a position where $V_{Rmax} = - N_{Rmax}$.

It should be understood, that the maximum radiation vector $V_{Rmax}$ and the normal radiation vector $N_{Rmax}$ may be calculated in any established coordinate system, different than the 3-dimensional Cartesian coordinate system XYZ as described above. In such case step 130 and step 140 may be performed in said established coordinate system, where the maximum radiation vector $V_{Rmax}$ and the normal radiation vector $N_{Rmax}$ were previously calculated. It should be noted that the vectors, positions and angles can be represented differently in other coordinate systems, but the geometrical relations between them described in the this disclosure should apply accordingly.

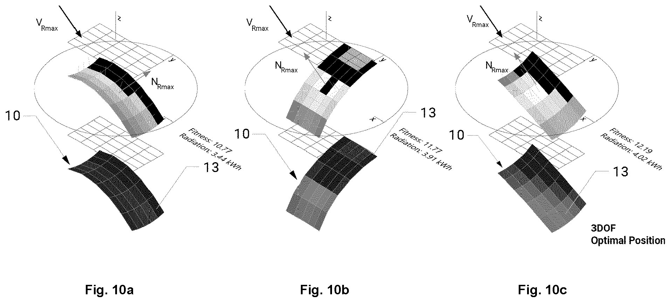

Figs. 10a - 10c present respectively: the initial position, the adjusted position and the optimal position of the PV surface 10 according to an embodiment of the present disclosure, where the PV surface 10 is subjected to shadowing conditions. The optimal position of the PV surface 10 corresponds to the position in which the amount of radiation received by the PV surface 10 is optimized. In some applications it may correspond to the position, in which the PV surface 10 receives increased amount of radiation. In other it may correspond to the position, in which the PV surface 10 receives different desired amount of radiation. Changing the position of the PV surface 10 to the optimal position allows to control the amount of radiation received by the PV surface 10.

In the example presented on Figs. 10a - 10c, a shadow falls on the PV surface 10. Shadowing coming from structures, including neighboring infrastructure or parts of the same PV system, which the PV surface 10 can be a part of, has an impact on the efficiency of a photovoltaic performance. The initial orientation of the PV surface 10 together with shadow causing structure is presented in Fig. 10a. The adjusted position of the PV surface 10 after performing steps 110-140 according to the method according to this disclosure as described above is presented in Fig. 10b.

Step 150 of changing the position of the PV surface 10 to the optimal position, according to the disclosed method is carried out after the position of the PV surface 10 is changed to the adjusted position, and correspondingly, steps 110-140 according to the present disclosure are completed. Step 150 includes a rotation step of the PV surface 10 around the axis corresponding to the normal radiation vector $N_{Rmax}$ of the PV surface 10, after the normal radiation vector $N_{Rmax}$ of the PV surface 10 and the maximum radiation vector $V_{Rmax}$ are adjusted. The rotation step allows to address the effect of shadowing on the photovoltaic performance of the PV surface 10 and to obtain the optimal position of the PV surface 10. This rotation step additionally allows to control the amount of radiation received by the PV surface 10.

In order to define a degree of impact of shadowing on the PV surface 10, a parameter hereby referred to as a fitness function is introduced. The value of the fitness function allows to assess the current shadowing impact on the PV surface 10 placed in a specific position. The PV surface 10 is divided into a mesh comprising plurality of PV mesh faces 13, as shown in Figs. 10a - c. The division into PV mesh faces 13 can be the same as the division into PV mesh faces 13 with respect to step 120, or according to another rules of division (e.g. more or less PV mesh faces 13 may be created). Each of the PV mesh faces 13 receives certain amount of radiation. The value of the component fitness function is calculated for each PV mesh face 13 of the PV surface 10. The value of the component fitness function of the PV mesh face 13 depends on the length of the projection of the maximum radiation vector $V_{Rmax}$ on the PV mesh face 13. The component fitness function reaches the maximum value when the length of the projected maximum radiation vector $V_{Rmax}$ is minimal. This occurs when the vector $V_{Rmax}$ reaches the PV mesh face 13 at an angle being substantially perpendicular to the surface of the PV mesh face 13 and as such more solar radiation is received. The fitness function is described by Formula II:

$$f(n) = \sum_{i=0}^{n}(1 - len(unit(\bar{V}_{Rmax,n})_n * area_n \qquad \text{Formula II}$$

where:

$n$ - number of PV mesh faces 13 of the PV surface 10,
$V_{Rmax,n}$ - projection of the vector $V_{Rmax}$ on the $n^{th}$ PV mesh face 13 of the PV surface 10,
$area_n$ - area of $n^{th}$ PV mesh face 13 of the PV surface 10.

The value of the component fitness function is being determined for each PV mesh face 13. The sum of component fitness function values calculated for each of the plurality of PV mesh faces 13, which the PV surface 10 was divided into, determines the overall fitness function value. The rotation step according to step 150 of the present disclosure is performed around the axis determined by the normal vector $N_{Rmax}$ of the PV surface 10, which also corresponds to the maximum radiation vector $V_{Rmax}$. This step 150 includes iterative rotation around said axis and after each step determining the value of the fitness function. In order to minimize the effect of shadowing, and optimizing the energy potential of the PV surface 10, the value of the fitness function is maximized. The orientation of the PV surface 10, which corresponds to the optimized energy potential is defined herein as the optimal position. The optimal position of the PV surface 10 is shown in Fig. 10c. Step 150 is performed for an angle range of 0° - 360° and/or -360° - 0°, with incremental step of 0.1° - 10°. More preferably, the incremental step is 1°.

The component fitness function value for the mesh face 13 depends on the area of the mesh face 13. As such, mesh faces 13 having greater areas have greater impact on the overall fitness function value.

The fitness function value is equal to 1 when there is no shadow on the PV surface 10 and equal to 0 or close to 0 (depending on the indirect radiation received) when PV surface 10 is fully in shadow. The fitness function allows to control the amount of solar radiation received by the PV surface 10. It is particularly beneficial in applications where controlled radiation amount is needed. A limited amount of harvested energy may be required, for example, in cases where there is a risk of overloading the grid. In such situations, it is necessary to set PV surfaces in a position to capture a fixed constant value of energy, as exceeding this value would have adverse effects. It is also particularly important to properly position the PV surface in outer space applications, where due to the lack of a barrier in the form of an atmosphere, the value of solar radiation falling on the PV surface may be higher than on Earth. In such conditions, the optimal position of the PV surface may be set to avoid overheating and loss of system efficiency. Also, in case of PV surfaces being arranged in larger PV systems, it may be necessary to equalize the amount of energy produced by each of the PV surfaces being part of said PV systems. The fitness function allows to control the amount of radiation received by each analyzed PV surface. In abovementioned applications, where controlled amount of solar radiation is needed, a threshold value of the fitness function is defined. The optimal position of the PV surface corresponds to its orientation at which the fitness function reaches the threshold value.

Step 150 is presented herein with respect to a non-flat PV surface 10 . However, it should be noted that it can be equally applied to flat PV surfaces.

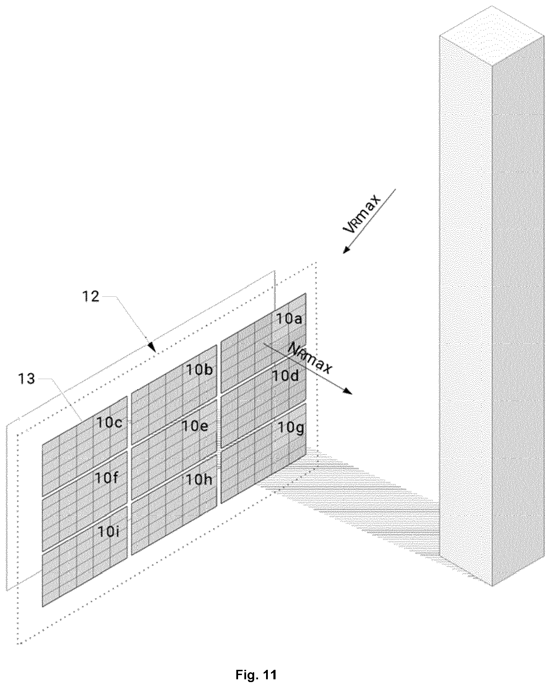

Fig. 11 - 13 present the PV system 12 comprising plurality of PV surfaces 10a - 10i, according to an embodiment of the present disclosure. The PV system 12 according to this embodiment comprises a plurality of flat PV surfaces 10a - 10i attached to a vertical structure. The PV system 12 is subjected to external shading. In such applications, a factor that may influence the performance of each PV surface and the PV system in general, other than external shading, is self-shading, which happens when some of the PV surfaces cast shade on at least one of the other PV surfaces being part of the same PV system.

Fig. 11 presents the PV system 12, where the PV surfaces 10a - 10i are in the initial positions. Step 110 is performed to calculate the maximum radiation vector $V_{Rmax}$, and step 120 is performed to calculate the normal radiation vector $N_{Rmax}$ for each of the PV surfaces 10a - 10i. Steps 110 and 120 are performed according to the present disclosure. The maximum radiation vector $V_{Rmax}$ and the normal radiation vector $N_{Rmax}$ may be calculated according to other alternative methods known in the art.

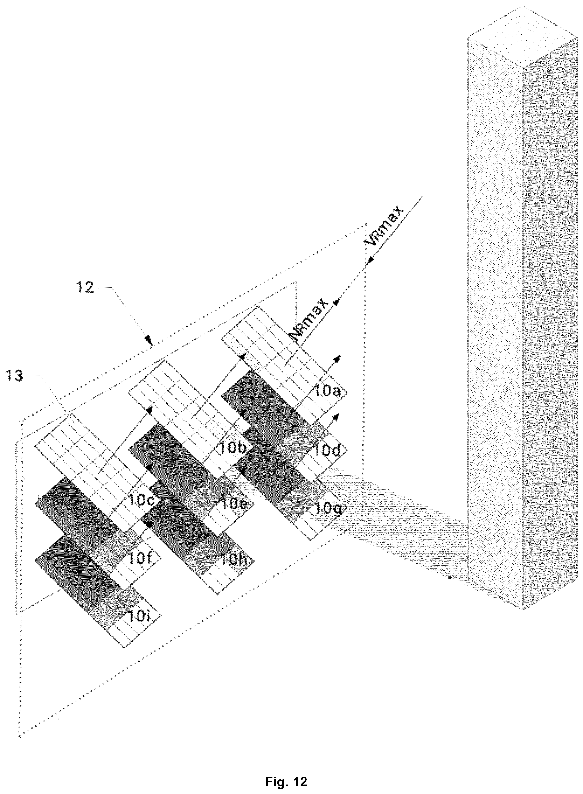

Fig. 12 presents the PV system 12 in which the PV surfaces 10a - 10i are in the adjusted positions, which adjusted positions are obtained by performing step 130 of determining the adjusted position of each PV surface 10a - 10i and step 140 of changing the positions of the PV surfaces 10a - 10i to the adjusted positions, so that $V_{Rmax}$ and $N_{Rmax}$ are adjusted, and $V_{Rmax} = - N_{Rmax}$. As can be seen on Fig. 12, the PV surfaces, according to this embodiment are subjected to self shadowing.

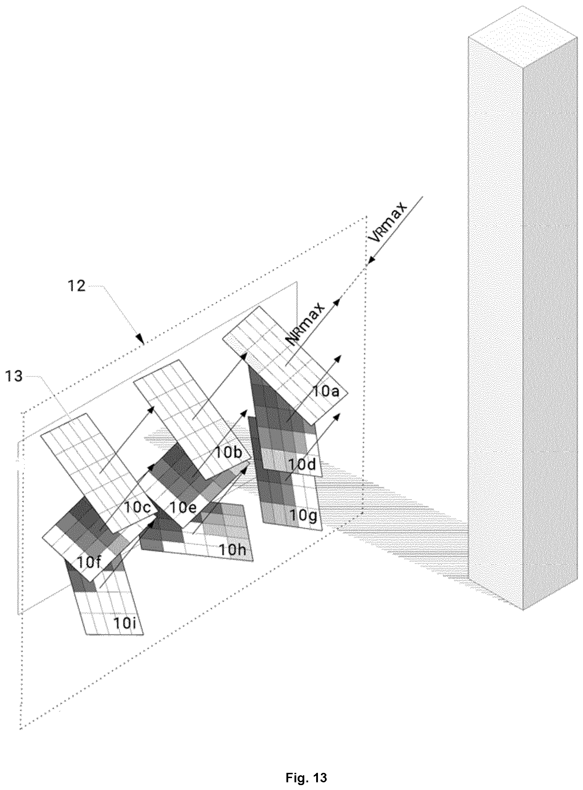

Fig. 13 presents the PV system 12 in which the PV surfaces 10a - 10i are in the optimal positions, which optimal positions are obtained by performing step 150 of changing the positions of the PV surfaces 10a - 10i to optimal positions. In case of self-shadowing, additional operations need to be performed in order to optimize the solar potential of the PV system 12. Said operations allow to control the effect of self-shadowing on the overall performance of the PV system 12. Said operations include additional step 150 of rotation performed by PV surfaces 10a - 10i. The PV surfaces 10a - 10i are rotated around the normal vector $N_{Rmax}$. First, a reference PV surface 10 is determined, as the one with the most received radiation. The amount of radiation for a specific PV surface 10 is described by the fitness function value, as it is described earlier in this disclosure. The fitness function value is calculated for each PV surface 10a - 10i being part of the PV system 12. Basing on the values of the fitness function of each PV surface 10a - 10i, the order of PV surfaces 10a - 10i to be rotated can be established. The PV surfaces are put in order to be rotated from the highest to the lowest fitness function value. It means that the first PV surface 10 which is rotating is this one which is subject to the least shading. The PV surfaces 10a - 10i receiving more radiation are rotated first compared to the PV surfaces 10a - 10i receiving less radiation. The PV surfaces 10a - 10i are rotated in order to optimize their orientation with regards to the desired solar radiation received. The step of optimizing the orientation of the PV surfaces 10a - 10i ends once it reaches the orientation where the desired solar radiation is received. Orientation of each of the PV surfaces 10a - 10i is optimized separately. The steps of optimization of the PV system 12 ends, when the sum of solar radiation received by each PV surfaces 10a - 10i being part of the PV system 12 is maximum, or the sum of solar radiation reaches a desired value. This is being defined by the sum of fitness function values of PV surfaces 10a - 10i, defined also previously as the overall fitness function value.

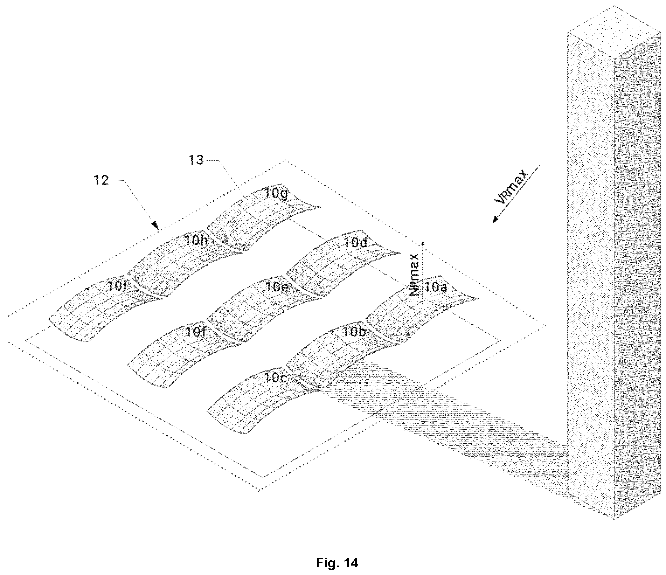

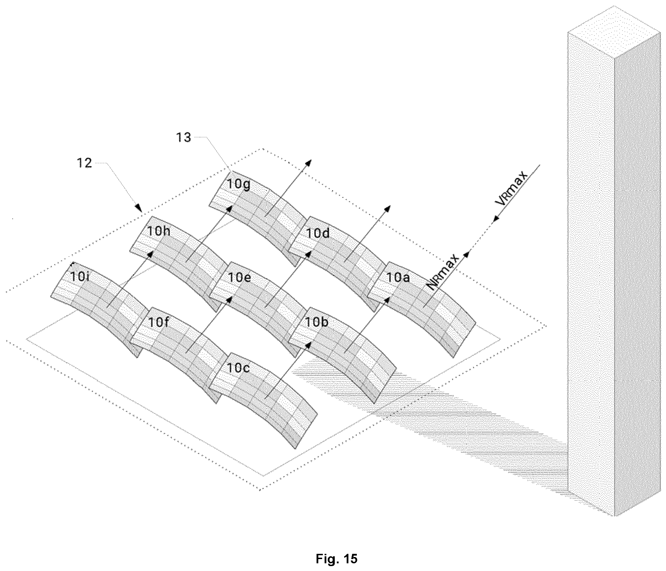

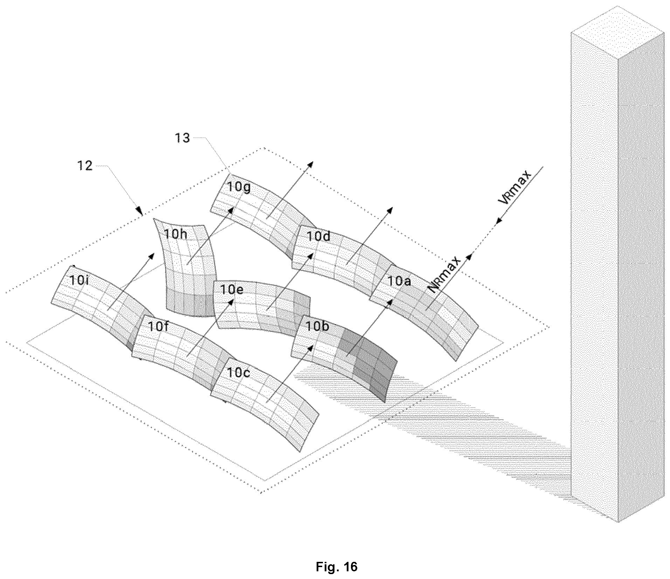

It should be noted that the method for positioning of PV surfaces 10 being part of larger PV systems 12 described above can be equally applied to systems containing non-flat PV surfaces 10, as shown in Figs. 14 - 16, or a combination of flat PV surfaces 10 and non-flat PV surfaces 10. The PV surfaces 10 of such systems may be attached to any structure vertically, as shown on Figs. 11 - 13 or horizontally as shown in Figs. 14 - 16. The PV surfaces 10 according to the method described above can be attached to the planar structures including vertical, horizontal, inclined ones, at any angle, or curved, in the form of a dome or funnel, or any other 2- or 3-dimensional substructures. The shape of the structure to which the PV surfaces 10 are attached can be arbitrary, as long as it allows for the positioning of the PV surface 10 according to the disclosed method. The maximum radiation vector $V_{Rmax}$ and the normal radiation vector $N_{Rmax}$ can be found by the methods described in this disclosure or any other alternative methods. Moreover, said methods can be applied to both static and kinetic photovoltaic systems. Various PV surface 10 shapes and PV surfaces of various scales (from small IoT devices, to large BAPV or BIPV applications) can be subjected to described methods.

Example 1

The solar radiation receiving structure is a non-flat PV surface 10. The PV surface 10 is placed in the city of Wroclaw, Poland, and it is not subjected to shadowing. The PV surface 10 is supposed to be placed in a position allowing it to receive increased amount of solar radiation. The method for positioning of the PV surface 10 is performed according to Fig. 1b. The selected time period is 1 hour between 11AM - 12PM on May 17th 2022.The average maximum radiation vector $V_{Rmax}$ is determined for the selected time frame. The weather data for the selected location and time frame, including radiation values and directions is taken from one of publicly available sources containing epw (EnergyPlus Weather Format) weather data.

Once all required weather data is obtained, the maximum radiation vector $V_{Rmax}$ for the location of the PV surface 10 is calculated according to step 110 of the present disclosure. The $V_{Rmax}$ is composed of two component vectors $V_{Rmax\,xy}$ and $V_{Rmax\,yz}$, where $V_{Rmax\,xy}$ corresponds to the projection of the $V_{Rmax}$ onto the Plane XY (14) and $V_{Rmax\,yz}$ corresponds to the projection of the $V_{Rmax}$ onto the Plane YZ (15) of the Cartesian coordinate system XYZ, as it is shown in Fig. 3-5. First, the component vector $V_{Rmax\,yz}$ is calculated. The sample PV surface 11 is placed in a first initial position in the same Cartesian coordinate system XYZ. The sample PV surface 11 is incrementally rotated around the first axis of rotation, until it reaches the optimal tilt angle for which the sample PV surface 11 receives the maximum radiation. The optimal tilt angle $\alpha$ corresponds to the direction of the $V_{Rmax\,yz}$. Next, the component vector $V_{Rmax\,xy}$ is calculated. The sample PV surface 11 is placed again in the initial position in the same coordinate system XYZ. The sample PV surface 11 is incrementally rotated around the second axis of rotation, until it reaches the optimal azimuth angle $\beta$ for which the sample PV surface 11 receives the maximum radiation. The optimal azimuth angle $\beta$ corresponds to the direction of the $V_{Rmax\,xy}$. The maximum radiation vector $V_{Rmax}$ is determined by summing up two component vectors $V_{Rmax\,xy}$ and $V_{Rmax\,yz}$.

The normal radiation vector $N_{Rmax}$ is obtained according to the step 120 of the present disclosure. The non-flat PV surface 10 is divided into a mesh containing plurality of n flat rectangular PV mesh faces 13. For each PV mesh face 13, a vector normal $N_n$ to its surface is determined. Each PV mesh face 13 has a known surface area. The normal radiation vector $N_{Rmax}$ of the non-flat PV surface 10 is calculated according to Formula I.

$$N_{Rmax} \;=\; \frac{\sum_{i=0}^{n} \overline{N_n} \times area_n}{\sum_{i=0}^{n} area_n} \qquad\qquad \text{Formula I}$$

where:

    n - number of PV mesh faces 13 of the PV surface 10;
    $N_n$ - a normal vector of $n^{th}$ PV mesh face 13 of the PV surface 10;
    $area_n$ - area of $n^{th}$ PV mesh face 13 of the PV surface 10.

The normal vector $N_{Rmax}$ is described in the same coordinate system XYZ as the maximum radiation vector $V_{Rmax}$. The normal vector $N_{Rmax}$ is comprised of component vectors $N_{Rmax\,xy}$, $N_{Rmax\,yz}$, $N_{Rmax\,xz}$. The component vectors of the normal radiation vector $N_{Rmax}$ form angles with the corresponding component vectors of the maximum radiation vector $V_{Rmax}$. Namely the $N_{Rmax\,xy}$ and $V_{Rmax\,xy}$ form the angle XY. Correspondingly, the $N_{Rmax\,yz}$ and $V_{Rmax\,yz}$ form the angle YZ.

In the next step, previously obtained vectors, the maximum radiation vector $V_{Rmax}$ and the normal radiation vector $N_{Rmax}$ of the PV surface 10 are adjusted, so that $V_{Rmax} = - N_{Rmax}$, according to step 130 and step 140 of the present disclosure. This is achieved by two rotation steps of the PV surface 10. Firstly, the PV surface 10 is rotated around a first axis of rotation, secondly, the PV surface 10 is rotated around a second axis of rotation. Two rotation steps allow to adjust the vectors and set the PV surface 10 in an orientation where $N_{Rmax} = - V_{Rmax}$, called the adjusted position. Firstly, the angle XY is aligned. Secondly, the angle YZ is aligned. This orientation, according to the conditions described in this example, allows the PV surface 10 to reach the increased solar energy potential.

List of reference numerals:

    10 - PV surface
    11 - sample PV surface
    12 - PV system
    13 - PV mesh face
    14 - first plane
    15 - second plane
    21 - radiation dome
    22 - reference point

23 - dome mesh face

110 - calculate maximum radiation vector

120 - calculate normal radiation vector of the PV surface

130 -determine the adjusted position of the PV surface

140 - change the position of the PV surface to the adjusted position

150 - change the position of the PV surface to the optimal position

$V_{Rmax}$ - maximum radiation vector

$V_{Rmax1}$ - first component vector of the maximum radiation vector

$V_{Rmax2}$ - second component vector of the maximum radiation vector

$N_{Rmax}$ - normal vector

$N_n$ - normal vector for each PV mesh face

$\alpha$ - tilt angle

$\beta$ - azimuth angle

$\gamma$ - reference angle

**Claims**

1. A method for positioning of a PV surface (10), the method comprising the steps of:

   (a) providing location data corresponding to a location of the PV surface (10),
   (b) providing radiation data corresponding to radiation at the location of the PV surface (10),
   (c) determining (110) a maximum radiation vector ($V_{Rmax}$) of the sun,
   (d) determining (120) a normal radiation vector ($N_{Rmax}$) of the PV surface (10),
   (e) determining (130) an adjusted position of the PV surface (10) at which the normal radiation vector ($N_{Rmax}$) of the PV surface (10) is aligned with the maximum radiation vector ($V_{Rmax}$),
   (f) changing (140) the position of the PV surface (10) to the adjusted position.

2. The method according to claim 1, wherein after performing step (f), the method further comprises the steps of:
   (g) changing (150) the position of the PV surface (10) to the optimal position, wherein step (g) comprises the sub-steps of:

   (g11) dividing the PV surface (10) to a mesh comprising a plurality of PV mesh faces (13),
   (g12) calculating a component fitness function value for each PV mesh face (13),
   (g13) calculating a fitness function value by summing the component fitness function values of each of the PV mesh faces (13),
   (g14) rotating the PV surface (10) around the axis determined by the normal radiation vector ($N_{Rmax}$) of the PV surface (10) by an incremental step,
   wherein steps (g12) - (g14) are repeated a until a desired value of the fitness function is reached,
   (g15) changing the position of the PV surfaces (10) to the optimal position, which corresponds to the position obtained after performing steps (g12) - (g14).

3. The method according any of previous claims, wherein the adjusted position of the PV surface (10) according to step (f) is obtained by rotating the PV surface (10) around 2 axes of rotation.

4. The method according to claim 2, wherein the value of the rotation angle in step (g) is in the range -360° - 0 and/or 0 - 360°.

5. The method according to any of previous claims, wherein step (c) of determining the maximum radiation vector ($V_{Rmax}$) includes at least one of, or a combination of: the direct radiation, the diffuse radiation and the reflection.

6. The method according to any previous claims, wherein step (c) includes the sub-steps of:

   (c11) determining the reference point (22) on the PV surface (10) as the center of PV surface (10),
   (c12) determining the radiation dome (21) around the reference point (22),
   (c13) dividing the radiation dome (21) into a mesh containing a plurality of dome mesh faces (23), wherein each of the dome mesh faces (23) are measurement points,
   (c14) determining the radiation value for each measurement point,

(c15) determining the maximum radiation vector ($V_{Rmax}$) as a weighted average of the radiation values received for each measurement point in step (c14).

7. The method according to any of claims 1 to 5, wherein step (c) includes the sub-steps of:

(c21) determining a coordinate system comprising the first plane (14) and the second plane (15), wherein the first plane (14) and the second plane (15) are perpendicular to each other and the first axis of rotation and the second axis of rotation, wherein the first and the second axes of rotation are perpendicular to each other,
(c22) determining a sample PV surface (11),
(c23) placing the sample PV surface (11) in the center of the coordinate system so that the sample PV surface (11) is in a first initial position,
(c24) rotating the sample PV surface (11) around the first axis of rotation by the first incremental angle and measuring the amount of radiation received by the sample PV surface (11) in the current position, and calculating the optimal first incremental angle, in which the amount of radiation received by the sample PV surface (11) is maximum,
(c25) determining the first component vector ($V_{Rmax1}$) of the maximum radiation vector ($V_{Rmax}$), wherein the first component vector ($V_{Rmax1}$) is a reversed vector to the normal vector to the sample PV surface (11) placed in the position corresponding to the optimal first incremental angle determined in step (c24),
(c26) placing the sample PV surface (11) in the center of the coordinate system so that the sample PV surface (11) is in a second initial position,
(c27) rotating the sample PV surface (11) around the second axis of rotation by the second incremental angle and measuring the amount of radiation received by the sample PV surface (11) in the current position, and calculating the optimal second incremental angle, in which the amount of radiation received by the sample PV surface (11) is maximum,
(c28) determining the second component vector ($V_{Rmax2}$) of the maximum radiation vector ($V_{Rmax}$), wherein the second component vector ($V_{Rmax2}$) is a reversed vector to the normal vector to the sample PV surface (11) placed in the position corresponding to the optimal second incremental angle determined in step (c27),
(c29) determining the maximum radiation vector ($V_{Rmax}$) as a sum of the first component vector ($V_{Rmax1}$) and the second component vector ($V_{Rmax2}$),
wherein steps (c23) to (c25) and (c26) to (c28) are performed independently.

8. The method according to any of claims 1 to 5, wherein step (c) includes the sub-step of:

(c31) determining a coordinate system,
(c32) determining a sample PV surface (11),
(c33) placing the sample PV surface (11) in the coordinate system,
(c34) changing the orientation of the sample PV surface (11) within said coordinate system and measuring the amount of radiation received by the PV surface,
(c35) determining the orientation of the sample PV surface (11) in which the amount of radiation received is maximum,
(c36) determining the maximum radiation vector ($V_{Rmax}$), wherein the maximum radiation vector ($V_{Rmax}$) is a reversed vector to the normal vector to the sample PV surface (11) placed in the orientation defined in step (c36).

9. The method according to any of previous claims, wherein step d) includes the sub-steps of:

(d11) dividing the PV surface (10) into the mesh containing a plurality of PV mesh faces (13),
(d12) determining the normal vector ($N_n$) for each PV mesh face (13),
(d13) determining the surface area (area") of each PV mesh face (13),
(d14) calculating the normal vector ($N_{Rmax}$) of the PV surface (10) based on the formula:

$$N_{Rmax} \;=\; \frac{\sum_{i=0}^{n} \overline{N_n} \times area_n}{\sum_{i=0}^{n} area_n}$$

wherein:

n is a number of PV mesh faces (13) of the PV surface (10);
$N_n$ is a normal vector of $n^{th}$ PV mesh face (13) of the PV surface (10);

area$_n$ is an area of n$^{th}$ PV mesh face (13) of the PV surface (10).

10. The method according to any of previous claims, wherein step (e) of determining the adjusted position of the PV surface (10) includes the sub-steps of:

(e11) determining at least two component vectors of the maximum radiation vector ($V_{Rmax}$) determined in step (c), in a 3-dimensional coordinate system,
(e12) determining at least two component vectors of the normal radiation vector ($N_{Rmax}$) determined in step (d), in the same coordinate system,
(e13) determining the angles between the corresponding component vectors as determined in step (e12) and (e13) which are defined as the angles between each pair of the corresponding component vectors of steps (e11) and (e12),
(e14) adjusting the angles determined in step (e13), so the PV surface (10) is placed in the adjusted position.

11. The method according to any of previous claims, wherein at least two PV surfaces (10) are arranged next to each other to form a PV system (12), wherein each PV surface (10) is positioned independently.

12. The method according to any of previous claims, wherein the radiation data provided in step (b) is selected from: historical data, live radiation measurement data or forecast data.

13. The method according to any of previous claims, wherein the adjusted position and/or optimal position of the PV surface (10) is constant or variable, with real-time changes or time intervals ranging from one second to one year.

14. The method according to any of previous claims, wherein the PV surface (10) is a flat surface, a non-flat surface or a polysurface.

15. A computer program comprising program code means for performing all the steps of the computer-implemented method according to any of previous claims, when said program is run on a computer.

location ---- Weather Data

time period ---- Weather Data Analysis

Step 110

Calculate
Maximum Radiation Vector

$$V_{Rmax}$$

Step 120

Calculate
Normal Radiation Vector
of the PV surface

$$N_{Rmax}$$

Step 130

Detrmine
the adjusted position
of the PV surface

$$V_{Rmax}=-N_{Rmax}$$

Step 140

Change the position
of the PV surface
to the adjusted position

Step 150

Change the position
of the PV surface
to the optimal position

$$\max f(x)$$

location ---- Weather Data

time period ---- Weather Data Analysis

Step 110

Calculate
Maximum Radiation Vector

$$V_{Rmax}$$

Step 120

Calculate
Normal Radiation Vector
of the PV surface

$$N_{Rmax}$$

Step 130

Detrmine
the adjusted position
of the PV surface

$$V_{Rmax}=-N_{Rmax}$$

Step 140

Change the position
of the PV surface
to the adjusted position

Fig. 1a

Fig. 1b

Fig. 2

Fig. 3

Fig. 4

Fig. 5

Fig. 6

Fig. 7

**Fig. 8**

**Fig. 9**

Fig. 10a

Fig. 10b

Fig. 10c

Fig. 11

Fig. 12

**Fig. 13**

Fig. 14

**Fig. 15**

**Fig. 16**

Europäisches
Patentamt

European
Patent Office

Office européen
des brevets

# EUROPEAN SEARCH REPORT

**Application Number**

**EP 23 46 1670**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FERNÁNDEZ-AHUMADA L M ET AL: "Mathematical study of the movement of solar tracking systems based on rational models", SOLAR ENERGY, vol. 150, 21 April 2017 (2017-04-21), pages 20-29, XP085041091, ISSN: 0038-092X, DOI: 10.1016/J.SOLENER.2017.04.006 | 1,3-5,7, 8,10-15 | INV. H02S20/32 |
| Y | * the whole document * | 6,9,14 | |
| A | | 2 | |
| | ----- | | |
| Y | ALPUERTO LANCE ET AL: "Modeling Methodology for Determining Energy Collection Potential of Photovoltaics Applied To Curved Surfaces", 2019 IEEE 46TH PHOTOVOLTAIC SPECIALISTS CONFERENCE (PVSC), IEEE, 16 June 2019 (2019-06-16), pages 1206-1211, XP033706596, DOI: 10.1109/PVSC40753.2019.8981231 [retrieved on 2020-02-03] | 6,9,14 | |
| | * page 1207 – page 1208 * | | TECHNICAL FIELDS SEARCHED (IPC) |
| | ----- | | H02S |
| A | US 2019/280642 A1 (FLANN NICHOLAS SIMON [US]) 12 September 2019 (2019-09-12) * the whole document * | 1-15 | |
| | ----- | | |
| A,D | WO 2022/043880 A2 (SCANTHESUN SP Z O O [PL]) 3 March 2022 (2022-03-03) * the whole document * | 1-15 | |
| | ----- | | |

The present search report has been drawn up for all claims

| Place of search | Date of completion of the search | Examiner |
|---|---|---|
| Berlin | 5 April 2024 | Persat, Nathalie |

EPO FORM 1503 03.82 (P04C01)

## ANNEX TO THE EUROPEAN SEARCH REPORT
## ON EUROPEAN PATENT APPLICATION NO.

**EP 23 46 1670**

This annex lists the patent family members relating to the patent documents cited in the above-mentioned European search report.
The members are as contained in the European Patent Office EDP file on
The European Patent Office is in no way liable for these particulars which are merely given for the purpose of information.

**05-04-2024**

| Patent document cited in search report | Publication date | Patent family member(s) | Publication date |
|---|---|---|---|
| US 2019280642 A1 | 12-09-2019 | NONE | |
| WO 2022043880 A2 | 03-03-2022 | NONE | |

EPO FORM P0459

For more details about this annex : see Official Journal of the European Patent Office, No. 12/82

**EP 4 542 853 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- PL 435069